# EUROPEAN PATENT APPLICATION

(11) **EP 4 794 320 A1**
(43) Date of publication of application: **19.08.2026**
(21) Application number: 25197801.1
(22) Date of filing: 25.08.2025
(51) Int. Cl.: H04N 1/00, H04N 1/23, G03G 15/00

(54) **INFORMATION PROCESSING SYSTEM**

(30) Priority: 18.02.2025 JP 2025024507; 25.03.2025 JP 2025050774
(71) Applicant: FUJIFILM Business Innovation Corp., Minato-ku Tokyo (JP)
(72) Inventor: MATSUO, Kota, Yokohama-shi, Kanagawa (JP); MATSUGUMA, Chihiro, Yokohama-shi, Kanagawa (JP); SAKAMOTO, Masaomi, Yokohama-shi, Kanagawa (JP); HORIKAWA, Kazuhiko, Yokohama-shi, Kanagawa (JP); YOKOHASHI, Mami, Yokohama-shi, Kanagawa (JP)
(74) Representative: Becker Kurig & Partner Patentanwälte mbB

(57) **Abstract**

An information processing system includes a processor configured to perform a control of storing a medium information group that is a set of medium information in which a physical property of a recording medium and image forming control information for controlling image forming on the recording medium are associated with each other, a control of acquiring measurement information that is information related to a measured physical property of the recording medium, a control of determining that the image forming is unavailable for the recording medium based on the acquired measurement information, a control of registering, in registering the physical property of the recording medium in the medium information group, the unavailability of the image forming for the recording medium in the medium information, and a control of displaying, in displaying information on the registered recording medium from the medium information group, the unavailability of the image forming for the recording medium in association with the recording medium.

## Description

### BACKGROUND OF THE INVENTION

### (i) Field of the Invention

The present invention relates to an information processing system.

### (ii) Description of Related Art

JP2022-178664A discloses an information processing apparatus that acquires physical property value information of a recording medium, determines whether or not the recording medium is a recording medium having a possibility of causing an interference in printing of a printer with respect to printing performance based on the physical property value information using information on the printer, and outputs a determination result to a display device.

### SUMMARY OF THE INVENTION

Before performing image forming, whether or not the recording medium has a possibility of causing an interference in the image forming may be determined based on a result of measuring a physical characteristic of the recording medium via a measuring device. For example, enabling a determination result to be checked even after the measurement is appropriate for the recording medium determined as having the possibility of causing the interference in the image forming.

An object of the present invention is to provide a function of checking a result even after measuring a physical characteristic of a recording medium for which image forming by an image forming apparatus is unavailable, particularly after registering information on the recording medium in a database of the information on the recording medium.

According to a first aspect of the present disclosure, there is provided an information processing system including a processor configured to perform a control of storing a medium information group that is a set of medium information in which a physical property of a recording medium and image forming control information for controlling image forming on the recording medium are associated with each other, a control of acquiring measurement information that is information related to a measured physical property of the recording medium, a control of determining that the image forming is unavailable for the recording medium based on the acquired measurement information, a control of registering, in registering the physical property of the recording medium in the medium information group, the unavailability of the image forming for the recording medium in the medium information, and a control of displaying, in displaying information on the registered recording medium from the medium information group, the unavailability of the image forming for the recording medium in association with the recording medium.

According to a second aspect of the present disclosure, in the information processing system according to the first aspect, the processor may be configured to perform a control of displaying an alert on the medium information group.

According to a third aspect of the present disclosure, in the information processing system according to the second aspect, the processor may be configured to perform a control of displaying an icon indicating that the alert is included on the medium information group and displaying content of the alert upon selection.

According to a fourth aspect of the present disclosure, in the information processing system according to the first aspect, the processor may be configured to perform a control of displaying the unavailability of the image forming for the recording medium on a detail display screen that is displayed in a case where one recording medium is selected from the medium information group.

According to a fifth aspect of the present disclosure, in the information processing system according to the first aspect, the processor may be configured to perform a control of displaying a parameter related to the unavailability of the image forming for the recording medium among physical properties of the recording medium in a highlighted manner.

According to a sixth aspect of the present disclosure, in the information processing system according to the first aspect, the processor may be configured to perform a control of changing the display of the unavailability of the image forming for the recording medium in accordance with a degree of an interference caused by the recording medium in the image forming.

According to the first aspect of the present disclosure, a function of checking a result even after measuring a physical characteristic of the recording medium for the recording medium on which the image forming by an image forming apparatus is unavailable, particularly after registering information on the recording medium in a database of the information on the recording medium can be provided.

According to the second aspect of the present disclosure, the result can be checked in a list for the recording medium for which the image forming by the image forming apparatus is unavailable.

According to the third aspect of the present disclosure, more detailed information can be selected and checked for the recording medium for which the image forming by the image forming apparatus is unavailable.

According to the fourth aspect of the present disclosure, more detailed information can be selected and checked for the recording medium for which the image forming by the image forming apparatus is unavailable.

According to the fifth aspect of the present disclosure, a factor for being unable to perform the image forming can be easily checked for the recording medium for which the image forming by the image forming apparatus is unavailable.

According to the sixth aspect of the present disclosure, the degree of the interference caused in the image forming can be checked for the recording medium for which the image forming by the image forming apparatus is unavailable.

### BRIEF DESCRIPTION OF THE DRAWINGS

Exemplary embodiment(s) of the present invention will be described in detail based on the following figures, wherein:
FIG. 1 is a diagram for describing an information processing system to which the present exemplary embodiment is applied;
FIG. 2 is a block diagram illustrating an example of a hardware configuration of a control unit of an image forming apparatus and an example of a hardware configuration of a server apparatus;
FIG. 3 is a block diagram illustrating an example of a hardware configuration of a medium measuring device;
FIG. 4 is a block diagram illustrating an example of a functional configuration of the server apparatus;
FIG. 5 is a diagram for describing an example of a flow of calculating a characteristic of a recording medium and an image forming parameter from measurement values measured by a sensor unit and an environment sensor;
FIG. 6 is a diagram illustrating an example of a result screen showing a measurement result of the medium measuring device;
FIG. 7 is a diagram illustrating an example of a list display screen for displaying medium information in a list;
FIG. 8 is a diagram illustrating an example of a detail display screen for displaying details of the medium information; and
FIG. 9 is a diagram illustrating an example of a flow of processing of registering the medium information in a medium information group.

### DETAILED DESCRIPTION OF THE INVENTION

Hereinafter, an exemplary embodiment of the present invention will be described in detail with reference to the accompanying drawings.

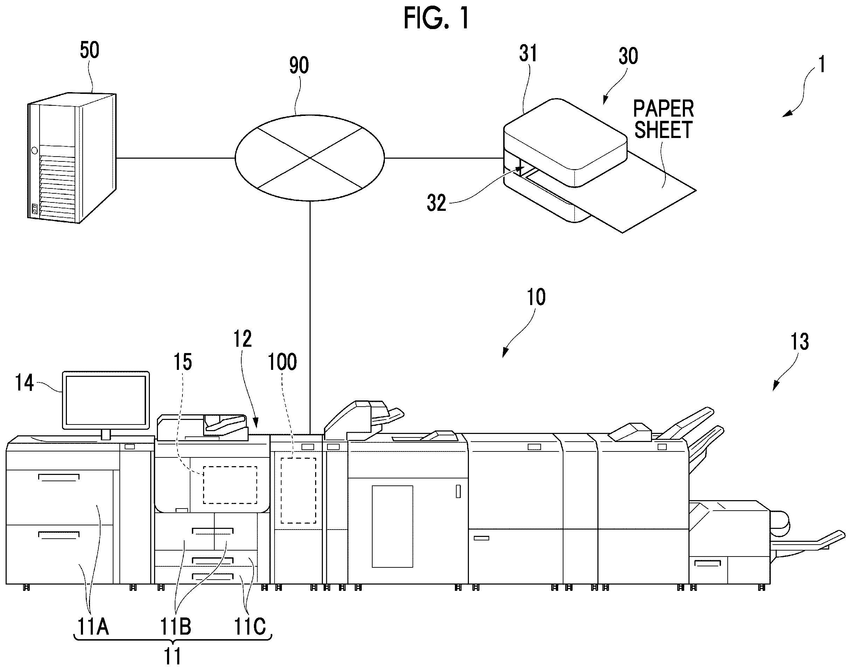

FIG. 1 is a diagram for describing an information processing system 1 to which the present exemplary embodiment is applied.

The information processing system 1 according to the present exemplary embodiment includes an image forming apparatus 10, a medium measuring device 30, and a server apparatus 50. The image forming apparatus 10, the medium measuring device 30, and the server apparatus 50 are connected via a network 90.

The image forming apparatus 10 is, for example, a so-called production printer used for image forming for office use. The production printer has a function of executing highspeed image forming processing with high image quality, compared to a printer for home use. The image forming apparatus 10 is not limited to the production printer and may be a printer for business use, a printer for home use, or the like.

The image forming apparatus 10 includes a feeding unit 11, an image forming unit 12, a post-processing unit 13, a display and operation unit 14, and an environment sensor 15. The image forming apparatus 10 includes a control unit 100 that controls the whole image forming apparatus 10.

The feeding unit 11 feeds a recording medium on which image forming is performed. The feeding unit 11 includes a plurality of feeding trays 11A, 11B, and 11C for accommodating each type of recording media to be fed. In the example illustrated in FIG. 1, the feeding unit 11 includes two feeding trays 11A, two feeding trays 11B, and two feeding trays 11C. Each of the feeding trays 11A to 11C can feed recording media having different sizes or the same size.

The image forming unit 12 may use not only an electrophotographic method of fixing and forming an image by transferring toner clinging to a charged and exposed photoconductor to a recording material but also, for example, an ink jet method of forming an image by ejecting ink onto a recording material.

The post-processing unit 13 performs various types of post-processing on the recording medium on which the image forming is performed by the image forming unit 12. The post-processing unit 13 is provided with, for example, processing of discharging image-formed matters of the same page as a unit by changing positions (that is, stack processing), staple processing of stapling a plurality of sheets of recording media, and processing of binding a plurality of sheets of recording media with an adhesive tape.

The display and operation unit 14 is an interface that displays various images for operation and various types of information for notifying a user and receives operations of the user. The display and operation unit 14 includes, for example, an input unit such as a button for operation or a touch sensor that detects an operation performed with a fingertip of the user, and a display unit such as a liquid crystal display or an organic electro-luminescent (EL) display.

The environment sensor 15 measures a state of an environment in which the image forming apparatus 10 is installed. The environment sensor 15 includes, for example, a thermometer and a hygrometer. In the example illustrated in FIG. 1, the environment sensor 15 is disposed inside the image forming apparatus 10 and is disposed near the feeding unit 11. The environment sensor 15 may be disposed outside the image forming apparatus 10.

The medium measuring device 30 is a device that measures a recording medium. The medium measuring device 30 includes a housing 31 including a sensor for measuring the recording medium, and a gap 32 for inserting the recording medium, and is configured to be compact and incorporate a box. The medium measuring device 30 may be provided inside the image forming apparatus 10. For example, the sensor for measuring the recording medium may be provided on a transport path for transporting the recording medium in the image forming apparatus 10 and measure the recording medium while the recording medium is transported. Alternatively, for example, sensors may be provided in the feeding trays 11A to 11C of the image forming apparatus 10, and the recording media accommodated in the feeding trays may be measured.

The server apparatus 50 functions as a database that stores a plurality of pieces of medium information. In the medium information, a characteristic of the recording medium and an image forming parameter for performing the image forming are stored in association with each other. The image forming parameter is an example of image forming control information.

Here, the medium information is information in which the characteristic of the recording medium and the image forming parameter for controlling the image forming on the recording medium are stored in association with each other. The user instructs the image forming apparatus 10 to perform the image forming on the recording medium using the medium information.

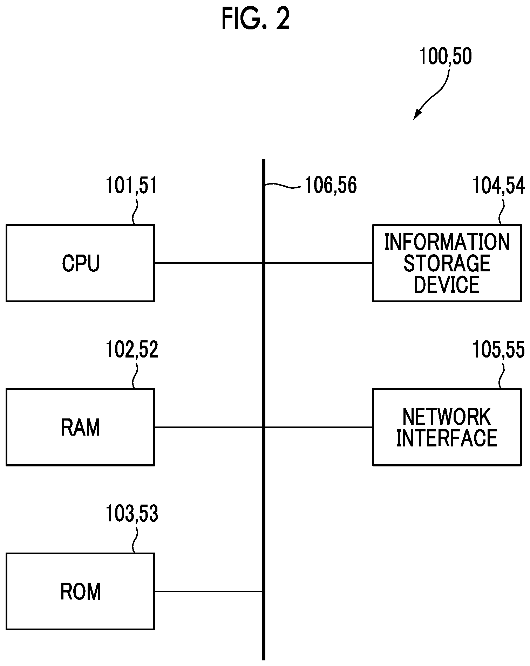

FIG. 2 is a block diagram illustrating an example of a hardware configuration of the control unit 100 of the image forming apparatus 10 and an example of a hardware configuration of the server apparatus 50.

The control unit 100 of the image forming apparatus 10 includes a central processing unit (CPU) 101, a random access memory (RAM) 102, a read only memory (ROM) 103, an information storage device 104, a network interface 105, and a signal line 106.

The CPU 101 controls the whole image forming apparatus 10 as an example of a processor. In a case where a control program is executed by the CPU 101, each functional unit of the image forming apparatus 10 is controlled. The RAM 102 is used as a work area in a case where the CPU 101 performs calculation. The ROM 103 is a memory in which various programs and the like executed by the CPU 101 are recorded. The information storage device 104 stores various settings used for controlling the image forming apparatus 10, image information used for the image forming, and the like. A hard disk drive (HDD), a semiconductor memory, or the like can be used as the information storage device 104. The network interface 105 transmits and receives data via the network 90 (see FIG. 1). Each unit of the control unit 100 is connected via a bus or the signal line 106.

As a hardware configuration of the server apparatus 50, for example, the same hardware configuration as the control unit 100 of the image forming apparatus 10 can be used. The server apparatus 50 includes a CPU 51, a RAM 52, a ROM 53, an information storage device 54, a network interface 55, and a signal line 56. The CPU 51 controls the server apparatus 50 as an example of a processor. In a case where a control program is executed by the CPU 51, each functional unit of the server apparatus 50 is controlled. The RAM 52 is used as a work area in a case where the CPU 51 performs calculation. The ROM 53 is a memory in which various programs and the like executed by the CPU 51 are recorded.

The information storage device 54 stores a trained machine learning model used for information processing via the server apparatus 50, various settings used for calculation control, the medium information, and the like. A hard disk drive (HDD), a semiconductor memory, or the like can be used as the information storage device 54. The information storage device 54 stores, for example, the medium information.

The network interface 55 transmits and receives data to and from the image forming apparatus 10 and the medium measuring device 30 via the network 90 (see FIG. 1).

Each unit of the server apparatus 50 is connected via a bus or the signal line 56.

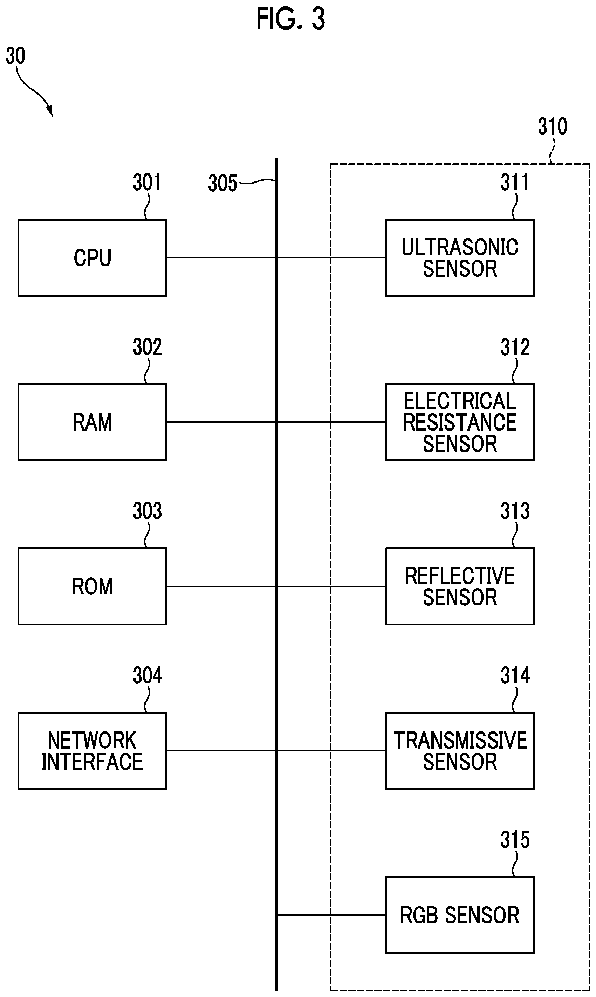

FIG. 3 is a block diagram illustrating an example of a hardware configuration of the medium measuring device 30.

The medium measuring device 30 includes a CPU 301, a RAM 302, a ROM 303, a network interface 304, a bus 305, and a sensor unit 310.

The CPU 301 controls the whole medium measuring device 30 as an example of a processor. In a case where a control program is executed by the CPU 301, each functional unit of the medium measuring device 30 is controlled. The RAM 302 is used as a work area in a case where the CPU 301 performs calculation. The ROM 303 is a memory in which various programs and the like executed by the CPU 301 are recorded.

The network interface 304 transmits measurement values measured by various sensors of the sensor unit 310 (described later) to the server apparatus 50 (see FIG. 1) via the network 90 (see FIG. 1).

The sensor unit 310 includes a sensor that measures a physical property of the recording medium. Types and the number of sensors included in the sensor unit 310 are not particularly limited. In the illustrated example, the sensor unit 310 includes an ultrasonic sensor 311, an electrical resistance sensor 312, a reflective sensor 313, a transmissive sensor 314, and an RGB sensor 315.

The ultrasonic sensor 311 generates an ultrasonic wave having a predetermined intensity from one side of the recording medium in a thickness direction to the recording medium, and measures the intensity of the ultrasonic wave on the other side of the recording medium in the thickness direction.

The electrical resistance sensor 312 measures electrical resistance of the recording medium by causing a microcurrent to flow through the recording medium. The electrical resistance sensor 312, for example, measures volume resistance as the electrical resistance of the recording medium in the thickness direction by causing the microcurrent to flow in the thickness direction of the recording medium. Alternatively, for example, the electrical resistance sensor 312 may measure surface resistance as the electrical resistance in a direction along a surface of the recording medium by causing the microcurrent to flow in the direction along the surface of the recording medium.

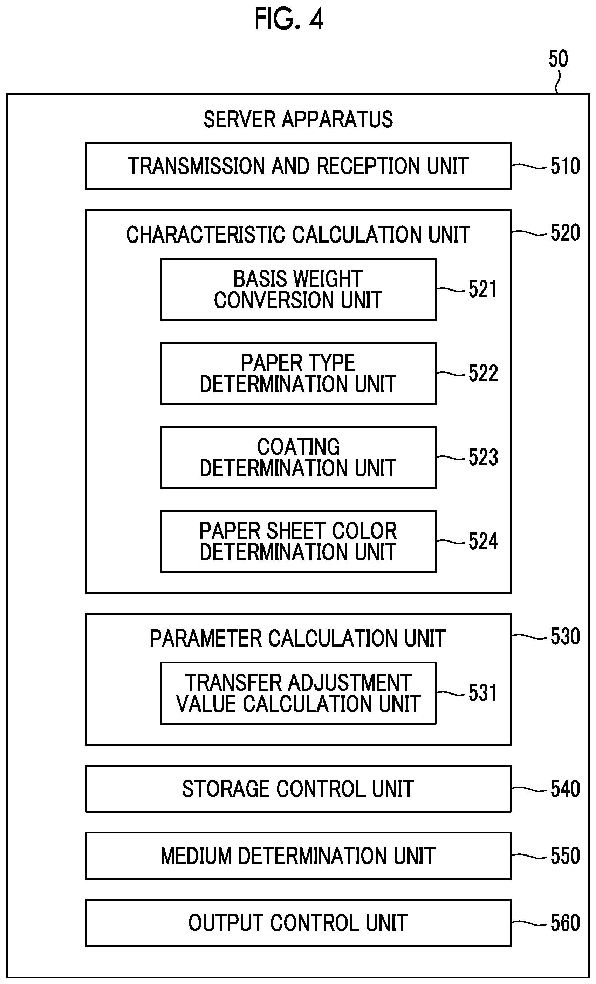

The reflective sensor 313 measures reflected light of the recording medium. More specifically, intensities of specularly reflected light and diffusely reflected light on the surface of the recording medium are measured. The transmissive sensor 314 measures an intensity of transmitted light of the recording medium. The RGB sensor 315 measures the intensity of the reflected light from the recording medium for each of red (R), green (G), and blue (B). Measurement values that are measurement results of these sensors are examples of information related to the physical property of the recording medium. The information related to the physical property of the recording medium may include, in addition to the measurement values, information on the physical property of the recording medium calculated from the measurement values. For example, in the present exemplary embodiment, the measurement value of the ultrasonic sensor 311 is converted into a basis weight of the recording medium by a basis weight conversion unit 521 (see FIG. 4) of the server apparatus 50 (described later). However, the medium measuring device 30 may calculate the basis weight of the recording medium from the measurement value of the ultrasonic sensor 311. The basis weight of the recording medium is an example of the physical property of the recording medium. That is, examples of the information related to the physical property of the recording medium include an electrical characteristic such as the electrical resistance of the recording medium, a physical characteristic such as the basis weight, and other characteristics such as the reflected light, the transmitted light, and color.

The medium measuring device 30 outputs values obtained by measuring the physical property of the recording medium via each sensor of the sensor unit 310 to the server apparatus 50 (see FIG. 1) as the measurement values. For example, in a case where the electrical resistance of the recording medium is measured, a value in Ω units is output to the server apparatus 50 as the measurement value.

### <Functional Configuration of Server Apparatus 50>

FIG. 4 is a block diagram illustrating an example of a functional configuration of the server apparatus 50.

The server apparatus 50 includes a transmission and reception unit 510, a characteristic calculation unit 520, a parameter calculation unit 530, a storage control unit 540, a medium determination unit 550, and an output control unit 560.

The transmission and reception unit 510 is connected to the image forming apparatus 10 (see FIG. 1) and the medium measuring device 30 (see FIG. 1) using the network interface 55 (see FIG. 2) and transmits and receives various types of information. The transmission and reception unit 510 receives the measurement values measured by the sensor unit 310 (see FIG. 3) of the medium measuring device 30 from the medium measuring device 30. The transmission and reception unit 510 receives an instruction of the user from the image forming apparatus 10 and transmits various types of information corresponding to the instruction of the user to the image forming apparatus 10. The transmission and reception unit 510 transmits information to be displayed on the display and operation unit 14 (see FIG. 1) to the image forming apparatus 10.

The characteristic calculation unit 520 calculates the characteristic of the recording medium using the information related to the physical property of the recording medium. In the present exemplary embodiment, the characteristic calculation unit 520 calculates characteristic information related to the characteristic of the recording medium using the measurement values acquired by receiving the measurement values from the medium measuring device 30. In the present exemplary embodiment, the characteristic information of the recording medium is calculated using a measurement value of the environment sensor 15 of the image forming apparatus 10, in addition to the measurement values acquired from the medium measuring device 30. A source from which the information related to the physical property of the recording medium used for calculating the characteristic of the recording medium via the characteristic calculation unit 520 is acquired is not particularly limited, and the information related to the physical property of the recording medium may be acquired from a database in which the information related to the physical property of the recording medium is stored. For example, the information related to the physical property of the recording medium may be stored in advance in association with a product name, a product number, and the like of the recording medium. In this case, the characteristic of the recording medium may be calculated using the information related to the physical property of the recording medium associated with the product name, the product number, and the like of the recording medium. Alternatively, for example, the measurement values may be acquired from a history of past measurement performed by the medium measuring device 30, and the characteristic of the recording medium may be calculated using the past measurement values of the medium measuring device 30 and the current measurement value of the environment sensor 15.

Here, the characteristic information is information on the characteristic of the recording medium derived from the physical property of the recording medium. Examples of the characteristic information include a type of the recording medium, whether or not the recording medium is coated, the basis weight of the recording medium, and the color of the paper sheet. The type of the recording medium is a category in which the recording media are divided by a material, such as plain paper, embossed paper, and a film. Examples of the type of the recording medium include plain paper, coated paper obtained by coating a surface of plain paper with a resin or the like, thick paper having a larger basis weight than plain paper, thin paper having a smaller basis weight than plain paper, and an OHP film.

The characteristic calculation unit 520 includes the basis weight conversion unit 521, a paper type determination unit 522, a coating determination unit 523, and a paper sheet color determination unit 524.

The basis weight conversion unit 521 converts the basis weight using the measurement value of the ultrasonic sensor 311. The paper type determination unit 522 estimates light transmittance of the recording medium using at least the measurement value of the transmissive sensor 314 and, for example, distinguishes between embossed paper and plain paper. The paper type determination unit 522 may further perform determination related to a paper type using the measurement values of the sensors other than the transmissive sensor 314. The coating determination unit 523, for example, determines presence or absence of a coating from the intensities of the specularly reflected light and the diffusely reflected light on the surface of the recording medium using at least the measurement value of the reflective sensor 313. The coating determination unit 523 may further perform determination related to the coating using the measurement values of the sensors other than the reflective sensor 313. For example, a type of coating such as a matte coating or a cast coating may be determined. The paper sheet color determination unit 524 determines a paper sheet color (the color of the recording medium) using the measurement value of the RGB sensor 315.

The parameter calculation unit 530 calculates the image forming parameter using the measurement values acquired from the medium measuring device 30. The parameter calculation unit 530 includes a transfer adjustment value calculation unit 531. The transfer adjustment value calculation unit 531 calculates a transfer voltage using at least the measurement value of the electrical resistance of the recording medium acquired from the medium measuring device 30. In calculating the transfer voltage, the transfer adjustment value calculation unit 531 may further use other measurement values for the calculation. The image forming parameter calculated by the parameter calculation unit 530 is not limited to the transfer voltage. For example, a fixing temperature setting value for fixing a coloring material image to the recording medium, a transfer output, a fixing drying temperature, and the like may be calculated.

The storage control unit 540 adds the medium information to the medium information group in which the medium information is collected, or changes content of the medium information included in the medium information group. In the present exemplary embodiment, the medium information group is stored in the information storage device 54 of the server apparatus 50. In the medium information, "name" for identifying the medium information, the "characteristic of the recording medium", and the "image forming parameter" created to obtain image forming quality intended by the user are stored in association with each other. Examples of the "image forming parameter" include an alignment roll load, a transfer nip load, the transfer output, the fixing drying temperature, a fixing nip temperature, air assist for the paper sheet trays, registration/alignment adjustment, curl correction, and a print speed. The medium information may include a comment or the like input by the user.

The medium determination unit 550 determines whether or not the image forming can be performed using the recording medium. A determination result of the medium determination unit 550 is stored in the medium information group by the storage control unit 540. For example, the determination of the medium determination unit 550 is performed by comparing the calculated characteristic information or image forming parameter with a predetermined reference. Examples of the predetermined reference include hardness and the basis weight of the recording medium.

For example, in a case where the recording medium corresponds to a prohibited medium having a possibility of damage on the paper sheet during traveling, the medium determination unit 550 determines that the image forming is unavailable. In a case where the basis weight of the recording medium is greater than or equal to a predetermined upper limit or less than or equal to a predetermined lower limit, the medium determination unit 550 determines that the image forming is unavailable. In a case where the characteristic of the recording medium or the image forming parameter is calculated by a determination model using AI analysis processing, the recording medium may fall outside an adaptation region of the model. In such a case, calculation accuracy of the characteristic of the recording medium or the image forming parameter may be decreased, and the medium determination unit 550 determines that the image forming is unavailable.

The output control unit 560 controls information to be displayed on the display and operation unit 14 (see FIG. 1). In displaying information on the recording medium registered in the medium information group for the recording medium for which a determination that the image forming is unavailable is made, the output control unit 560 displays a display indicating unavailability of the image forming in association with the recording medium. An alert may be displayed on the medium information group in which the medium information is displayed in a list or may be displayed on a detail display screen that is displayed in a case where one recording medium is selected from the medium information group. For example, display of the medium information group may be configured such that an icon indicating that the alert is included is displayed, and content of the alert is displayed upon selection.

In displaying the information on the recording medium registered in the medium information group for the recording medium for which a determination that the image forming is unavailable is made, the output control unit 560 may be configured to display the unavailability of the image forming for the recording medium by changing the display of the unavailability in accordance with a degree of an interference. For example, in a case where the recording medium has the possibility of damage on the paper sheet, the alert may be displayed in a highlighted manner, compared to a case where normal image formation is unavailable because of the basis weight.

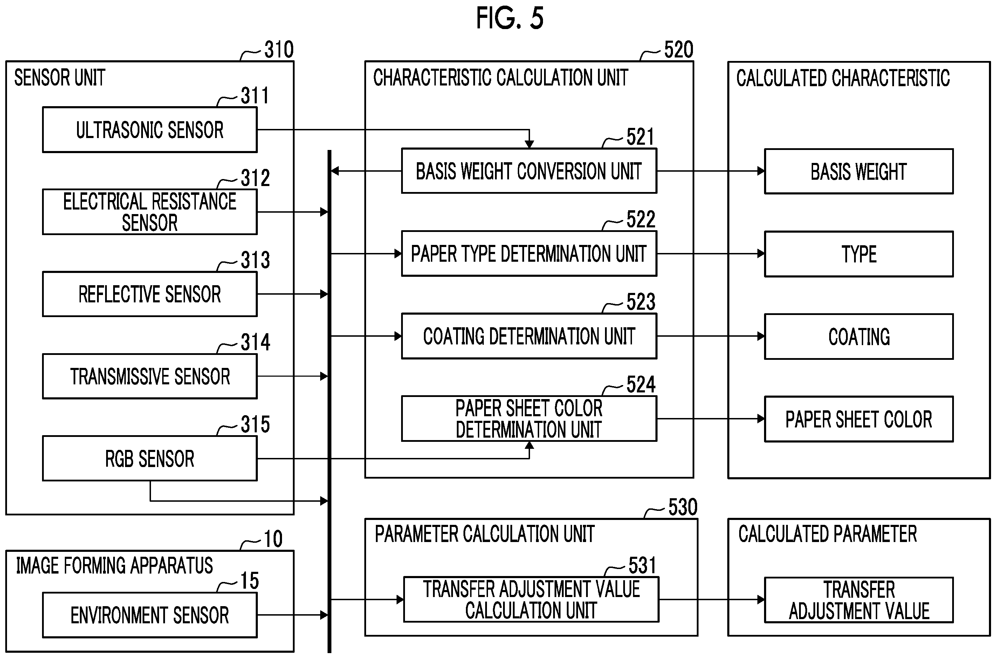

FIG. 5 is a diagram for describing an example of a flow of calculating the characteristic of the recording medium and the image forming parameter from the measurement values measured by the sensor unit 310 and the environment sensor 15.

As illustrated, the basis weight conversion unit 521 converts the measurement value of the ultrasonic sensor 311 into a basis weight. The basis weight converted by the basis weight conversion unit 521 is output as a characteristic value and is used as input values of the characteristic calculation unit 520 and the parameter calculation unit 530.

The paper type determination unit 522 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The paper type determination unit 522 outputs the type of the recording medium from the input values.

The coating determination unit 523 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The coating determination unit 523 determines and outputs the presence or absence of the coating from the input values.

The paper sheet color determination unit 524 receives input of the value of the RGB sensor 315 and outputs the paper sheet color.

The transfer adjustment value calculation unit 531 receives input of the basis weight converted by the basis weight conversion unit 521, the measurement value of the electrical resistance sensor 312, the measurement value of the reflective sensor 313, the measurement value of the transmissive sensor 314, the measurement value of the RGB sensor 315, and the measurement value of the environment sensor 15. The transfer adjustment value calculation unit 531 outputs a transfer adjustment value using the input basis weight and the input measurement values.

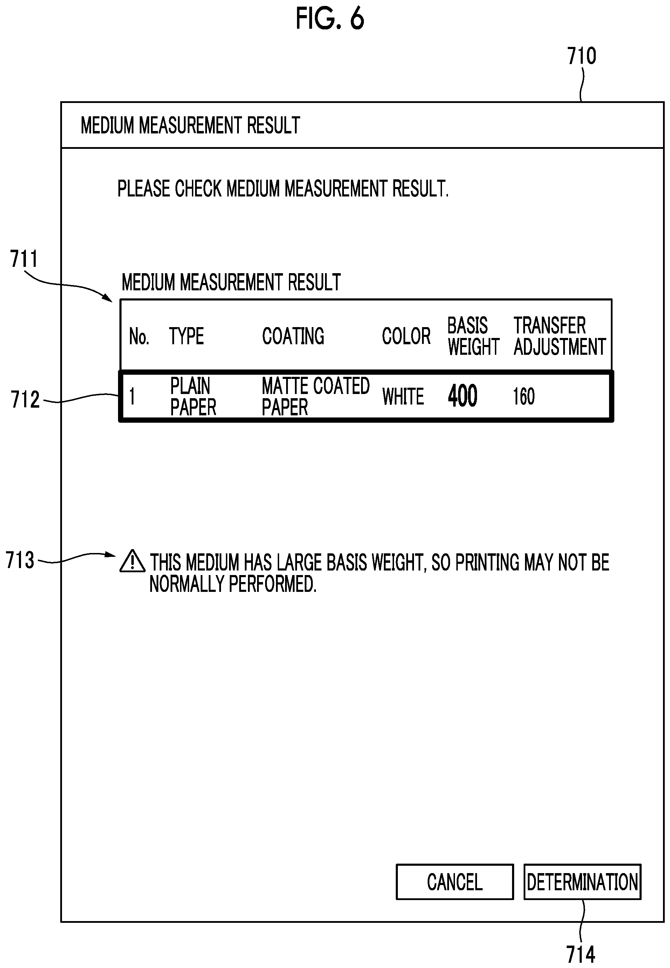

FIG. 6 is a diagram illustrating an example of a result screen 710 showing the measurement results of the medium measuring device 30.

The result screen 710 is displayed after the calculation of the characteristic information and the calculation of the image forming parameter by the medium measuring device 30 and the determination of the medium determination unit 550 are completed. FIG. 6 illustrates an example of the result screen 710 in a case where the medium determination unit 550 determines that normal image forming is unavailable because the basis weight of the recording medium is large.

The result screen 710 displays the measurement results that are the medium information including the characteristic of the recording medium and the image forming parameter calculated using the measurement values provided by the medium measuring device 30. In the illustrated example, one measurement result is displayed in a measurement result display field 711. Each measurement result displays the characteristic of the recording medium and the image forming parameter in association with "No." indicating a number for distinguishing the result. In the example of FIG. 6, "type", "coating", "color", and "basis weight" are displayed as the characteristic of the recording medium. In the example of FIG. 6, "transfer adjustment" is displayed as the image forming parameter. Specifically, in the measurement result of which "No." is "1", "plain paper" is displayed as "type", "matte coated paper" is displayed as "coating", "white" is displayed as "color", "400" is displayed as "basis weight", and "160" is displayed as "transfer adjustment". In FIG. 6, "basis weight" that is a factor for not being able to perform the image forming is displayed in a highlighted and enlarged manner. A method of displaying the factor in a highlighted manner is not limited to the illustrated example. For example, the factor may be displayed by changing a color or a thickness. The output control unit 560 displays a parameter related to the unavailability of the image forming for the recording medium in a highlighted manner.

In the measurement result display field 711, a frame 712 indicating which measurement result is selected among the displayed measurement results is displayed. In a case where a plurality of measurement results are displayed, the user selects the measurement result by touching a region in which the measurement result is displayed. The frame 712 moves to surround the selected measurement result.

An item of the characteristic of the recording medium displayed in the measurement result display field 711 and an item of the image forming parameter to be displayed are not particularly limited, and other items may be displayed.

An alert 713 is displayed in a center portion of the result screen 710. For example, the alert 713 displays whether or not the image forming can be performed in accordance with the basis weight of the recording medium. In the example illustrated in FIG. 6, the alert 713 displays "This medium has a large basis weight, so printing may not be normally performed.".

A determination button 714 for determining the selection of the measurement result is displayed in the lower portion of the result screen 710. In a case where the determination button 714 is pressed by the user, the selected measurement result is registered in the medium information group.

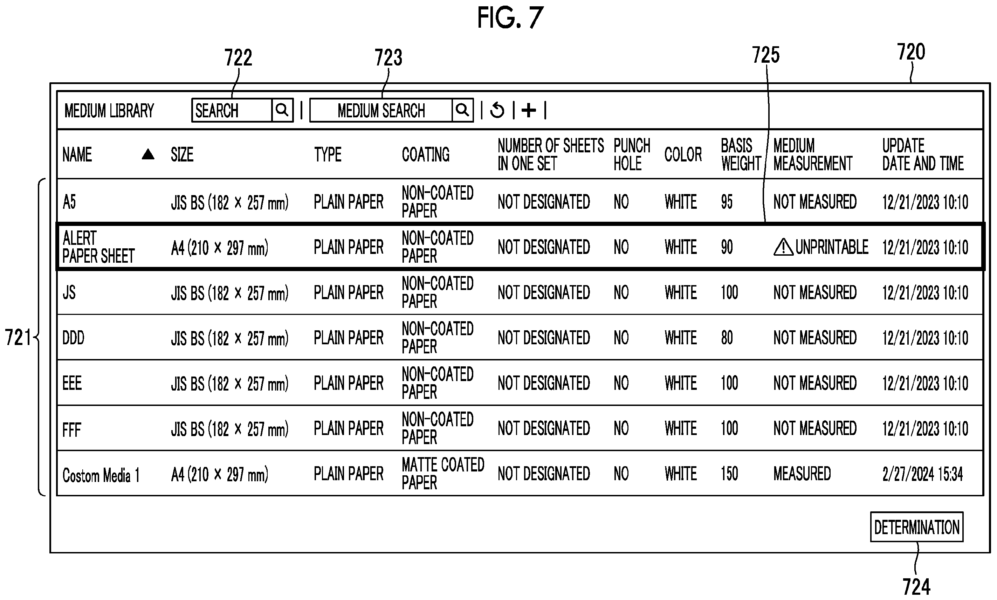

FIG. 7 is a diagram illustrating an example of a list display screen 720 for displaying the medium information in a list.

In a medium information group display region 721 in which the medium information is listed, the medium information registered in a medium library that is the medium information group is displayed. In the example illustrated in FIG. 7, "size", "type", "coating", "number of sheets in one set", "punch hole", "color", "basis weight", "medium measurement", and "update date and time" are displayed in association with "name". The displayed characteristic information is not limited to the illustrated example, and other characteristics may be displayed.

In the medium information group display region 721, a frame 725 indicating which medium information is selected among displayed pieces of medium information is displayed. The user selects the medium information by pressing a region in which the medium information is displayed. The frame 725 moves to surround the selected medium information. In the example illustrated in FIG. 7, the medium information of which the name is "alert paper sheet" is selected. Here, the medium information of which the name is "alert paper sheet" is information on the recording medium for which the medium determination unit 550 determines that the image forming is unavailable. In a medium measurement field, an icon indicating the alert and an alert of "unprintable" are displayed.

A search box 722 for searching for the name of the medium information and a medium search box 723 for performing a search using the medium measuring device 30 are displayed on the list display screen 720. In a case where the medium search box 723 is pressed, display prompting an operation of the medium measuring device 30 is performed. In a case where the user measures the medium using the medium measuring device 30, a medium information group having a high matching ratio with respect to the measured medium is displayed as a search result.

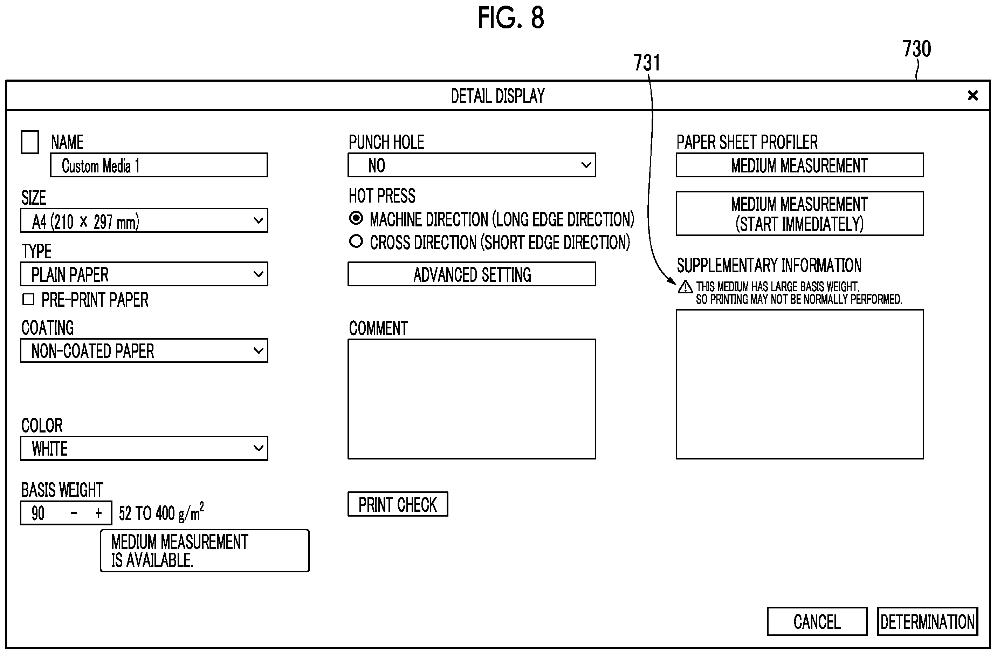

On the list display screen 720, a determination button 724 for determining selection of the medium information is displayed in a lower portion of the list display screen 720. In a case where the determination button 724 is pressed by the user, the screen transitions to a detail display screen 730 illustrated in FIG. 8.

FIG. 8 is a diagram illustrating an example of the detail display screen 730 for displaying details of the medium information.

On the detail display screen 730, "size", "type", "coating", "color", "basis weight", "punch hole", "hot press", "paper sheet profiler", and "supplementary information" are displayed in association with "name". In the supplementary information, an alert display 731 indicating the unavailability of the image forming for the recording medium is displayed. In the alert display 731, an icon indicating the alert and an alert text such as "This medium has a large basis weight, so printing may not be normally performed." are displayed.

The user can check whether or not the alert is present on the list display of the medium information and check detailed information on the alert upon selection.

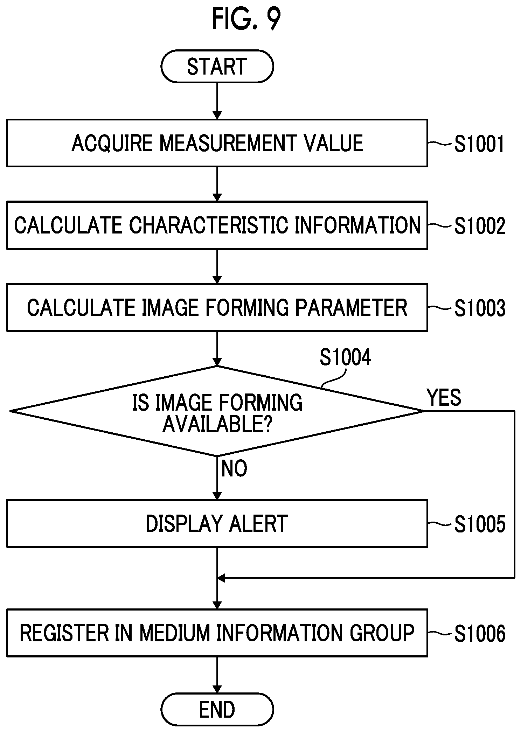

FIG. 9 is a diagram illustrating an example of a flow of processing of registering the medium information in the medium information group.

In FIG. 9, first, the transmission and reception unit 510 (see FIG. 4) of the server apparatus 50 acquires the measurement values measured by the sensor unit 310 (see FIG. 3) from the medium measuring device 30 (step S1001). The characteristic calculation unit 520 calculates the characteristic information of the recording medium using the acquired measurement values (step S1002). The parameter calculation unit 530 calculates the image forming parameter of the recording medium using the acquired measurement values (step S1003).

Next, the medium determination unit 550 determines whether or not the image forming can be performed using the recording medium (step S1004). In a case where a determination that the image forming can be performed is made (YES in step S1004), the processing transitions to step S1006. Meanwhile, in a case where a determination that the image forming is unavailable is made (NO in step S1004), the output control unit 560 displays the alert (step S1005).

For example, the medium determination unit 550 determines that the image forming is unavailable because the recording medium corresponds to the prohibited medium having the possibility of damage on the paper sheet during traveling. In this case, the output control unit 560, for example, displays an alert text such as "The paper sheet may be scratched during traveling.". Alternatively, for example, the medium determination unit 550 determines that the image forming is unavailable because the recording medium falls outside the adaptation region of the model. In this case, the output control unit 560, for example, displays an alert text such as "Setting of this paper sheet may result in low accuracy.".

Alternatively, for example, the medium determination unit 550 determines that the image forming is unavailable because the basis weight of the recording medium is less than or equal to the predetermined lower limit. In this case, the output control unit 560, for example, displays an alert text such as "Basis weight is small, so printing may not be normally performed.". Here, the lower limit value of the basis weight that is displayable on the display and operation unit 14 (see FIG. 1) may be larger than the measurement value of the basis weight in specifications of the information processing system 1. In this case, the output control unit 560 displays the lower limit value of the displayable basis weight and displays an alert text such as "Basis weight less than xx gsm will be set to xx gsm.". Here, "xx gsm" is the lower limit value of the basis weight displayable on the display and operation unit 14.

Alternatively, for example, the medium determination unit 550 determines that the image forming is unavailable because the basis weight of the recording medium is greater than or equal to the predetermined upper limit. In this case, the output control unit 560, for example, displays an alert text such as "Basis weight is large, so printing may not be normally performed.". Here, the upper limit value of the basis weight that is displayable on the display and operation unit 14 (see FIG. 1) may be smaller than the measurement value of the basis weight in the specifications of the information processing system 1. In this case, the output control unit 560 displays the upper limit value of the displayable basis weight and displays an alert text such as "Basis weight greater than yy gsm will be set to yy gsm.". Here, "yy gsm" is the upper limit value of the basis weight displayable on the display and operation unit 14.

Next, the storage control unit 540 registers the medium information in the medium information group (step S1006). Here, the storage control unit 540 also registers the determination result of the medium determination unit 550 together with the characteristic of the recording medium and the image forming parameter. As illustrated in FIGS. 7 and 8, in displaying the information on the registered recording medium from the medium information group, the unavailability of the image forming for the recording medium is displayed in association with the recording medium.

In the present exemplary embodiment, the determination result indicating the unavailability of the image forming for the recording medium can be displayed even after the information on the recording medium is registered in the medium information group.

In the exemplary embodiments, the processes are performed by any computer. The computer may perform the processes by using a processor serving as hardware, a program serving as software, or combination of these. In this case, the processor is configured to perform the processes in the exemplary embodiments in cooperation with the program and may function as a unit or a means in the exemplary embodiments. The order in which the processor performs the processes is not limited to the described order and may be changed appropriately. The computer may be a general-purpose computer, an application specific computer, a workstation, or another system capable of performing the processes.

The processor may be composed of one or more pieces of hardware, and the type of the hardware is not limited. For example, the processor may be composed of hardware such as a central processing unit (CPU), a micro processing unit (MPU), a programmable logic device such as a field programmable gate array (FPGA), a dedicated circuit for performing specific processing such as an application specific integrated circuit (ASIC), a graphics processing unit (GPU), or a neural processing unit (NPU). Regarding the type of the hardware, different types of hardware may be combined. If multiple pieces of hardware are configured to perform one or more processes of the processor, the multiple pieces of hardware may be present in apparatuses physically away from each other or may be present in one apparatus. In each of exemplary embodiments, the order in which the processor performs the processes is not limited to the order described above and may be changed appropriately. The hardware is composed of electric circuitry in which circuit elements such as semiconductor devices are combined, or the like.

Further, the program may be software such as firmware or microcode. The program may be, for example, a program module group, and the functions thereof may be implemented by processors configured to implement the respective functions. The program may be program code or multiple code segments stored in one or more non-transitory computer readable media (for example, a storage medium or another storage). The program may be stored in such a divided manner in multiple non-transitory computer readable media present in apparatuses physically away from each other. The program code or the code segments may represent a procedure, a function, a sub program, a routine, a subroutine, a module, a software package, a class or any combination of instructions, data structures, or program statements. The program code or the code segment may be connected to another code segment or a hardware circuit by transmitting and/or receiving information, data, an argument, a parameter, or memory content.

### (Supplementary Note)

(((1))) An information processing system comprising:
   a processor configured to perform:
   a control of storing a medium information group that is a set of medium information in which a physical property of a recording medium and image forming control information for controlling image forming on the recording medium are associated with each other;
   a control of acquiring measurement information that is information related to a measured physical property of the recording medium;
   a control of determining that the image forming is unavailable for the recording medium based on the acquired measurement information;
   a control of registering, in registering the physical property of the recording medium in the medium information group, the unavailability of the image forming for the recording medium in the medium information; and
   a control of displaying, in displaying information on the registered recording medium from the medium information group, the unavailability of the image forming for the recording medium in association with the recording medium.
(((2))) The information processing system according to (((1))), wherein the processor is configured to perform:
   a control of displaying an alert on the medium information group.
(((3))) The information processing system according to (((2))), wherein the processor is configured to perform:
   a control of displaying an icon indicating that the alert is included on the medium information group and displaying content of the alert upon selection.
(((4))) The information processing system according to (((1))), wherein the processor is configured to perform:
   a control of displaying the unavailability of the image forming for the recording medium on a detail display screen that is displayed in a case where one recording medium is selected from the medium information group.
(((5))) The information processing system according to (((1))), wherein the processor is configured to perform:
   a control of displaying a parameter related to the unavailability of the image forming for the recording medium among physical properties of the recording medium in a highlighted manner.
(6) The information processing system according to (((1))), wherein the processor is configured to perform:
   a control of changing the display of the unavailability of the image forming for the recording medium in accordance with a degree of an interference caused by the recording medium in the image forming.

According to the information processing system according to (((1))), a function of checking a result even after measuring a physical characteristic of the recording medium for the recording medium on which the image forming by an image forming apparatus is unavailable, particularly after registering information on the recording medium in a database of the information on the recording medium can be provided.

According to the information processing system according to (((2))), the result can be checked in a list for the recording medium for which the image forming by the image forming apparatus is unavailable.

According to the information processing system according to (((3))), more detailed information can be selected and checked for the recording medium for which the image forming by the image forming apparatus is unavailable.

According to the information processing system according to (((4))), more detailed information can be selected and checked for the recording medium for which the image forming by the image forming apparatus is unavailable.

According to the information processing system according to (((5))), a factor for being unable to perform the image forming can be easily checked for the recording medium for which the image forming by the image forming apparatus is unavailable.

According to the information processing system according to (((6))), the degree of the interference caused in the image forming can be checked for the recording medium for which the image forming by the image forming apparatus is unavailable.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

10: image forming apparatus
30: medium measuring device
50: server apparatus
310: sensor unit
510: transmission and reception unit
520: characteristic calculation unit
521: basis weight conversion unit
522: paper type determination unit
523: coating determination unit
524: paper sheet color determination unit
530: parameter calculation unit
531: transfer adjustment value calculation unit
540: storage control unit
550: medium determination unit
560: display control unit

## Claims

1. An information processing system comprising:
a processor configured to perform:
a control of storing a medium information group that is a set of medium information in which a physical property of a recording medium and image forming control information for controlling image forming on the recording medium are associated with each other;
a control of acquiring measurement information that is information related to a measured physical property of the recording medium;
a control of determining that the image forming is unavailable for the recording medium based on the acquired measurement information;
a control of registering, in registering the physical property of the recording medium in the medium information group, the unavailability of the image forming for the recording medium in the medium information; and
a control of displaying, in displaying information on the registered recording medium from the medium information group, the unavailability of the image forming for the recording medium in association with the recording medium.

2. The information processing system according to claim 1, wherein the processor is configured to perform:
a control of displaying an alert on the medium information group.

3. The information processing system according to claim 2, wherein the processor is configured to perform:
a control of displaying an icon indicating that the alert is included on the medium information group and displaying content of the alert upon selection.

4. The information processing system according to claim 1, wherein the processor is configured to perform:
a control of displaying the unavailability of the image forming for the recording medium on a detail display screen that is displayed in a case where one recording medium is selected from the medium information group.

5. The information processing system according to claim 1, wherein the processor is configured to perform:
a control of displaying a parameter related to the unavailability of the image forming for the recording medium among physical properties of the recording medium in a highlighted manner.

6. The information processing system according to claim 1, wherein the processor is configured to perform:
a control of changing the display of the unavailability of the image forming for the recording medium in accordance with a degree of an interference caused by the recording medium in the image forming.
